# EUROPEAN PATENT APPLICATION

(11) **EP 4 718 548 A1**
(43) Date of publication of application: **01.04.2026**
(21) Application number: 24908381.7
(22) Date of filing: 20.12.2024
(51) Int. Cl.: H01M 10/04

(54) **BATTERY CELL STACKING SYSTEM**

(30) Priority: 22.12.2023 KR 20230190342; 30.01.2024 KR 20240014425; 29.04.2024 KR 20240057047
(71) Applicant: LG Energy Solution, Ltd., Seoul 07335 (KR)
(72) Inventor: LEE, Jungwoo, Daejeon 34122 (KR); LEE, Jaechul, Daejeon 34122 (KR); KIM, Heesung, Daejeon 34122 (KR); KIM, Jong Chan, Daejeon 34122 (KR); SEUNG, Kyung Bae, Daejeon 34122 (KR)
(74) Representative: Plasseraud IP
(86) International application number: PCT/KR2024/097192
(87) International publication number: WO 2025/136077

(57) **Abstract**

Provided is a battery cell stacking system comprising: a stacking worktable on which a cell stack including one or more battery cells is manufactured; and a stacking device for stacking the one or more battery cells on the stacking worktable. The stacking device is configured to perform: a first operation of rotating around a rotation shaft connected to the stacking device in a state in which the one or more battery cells are seated; and a second operation of moving toward the stacking worktable to supply the one or more battery cells to the stacking worktable.

## Description

### Technical Field

The present disclosure relates to a battery cell stacking system.

### Background Art

Unlike primary batteries, secondary batteries can be charged and discharged, so the secondary batteries can be applied to various fields such as digital cameras, mobile phones, laptops, hybrid cars, and electric cars. The secondary batteries include nickel-cadmium batteries, nickel-metal hydride batteries and nickel-hydrogen batteries, and lithium-ion batteries are widely used these days.

As large capacity and high output power are required in electric vehicles and power storage devices, large-capacity battery devices such as battery modules or battery packs that house a cell stack with multiple secondary batteries (battery cells) stacked inside a housing are widely used.

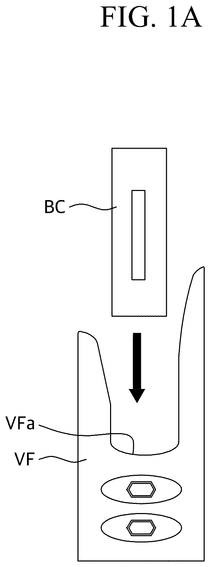

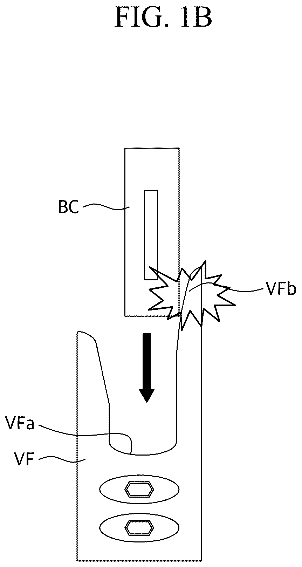

The existing battery cell stacking devices include a stacking table on which battery cells are stacked and fork equipment for transporting battery cells to the stacking table to produce a cell stack. For example, FIG. 1 illustrates an existing battery cell stacking device.

In a cell stacking method using an existing battery cell stacking device, after installing battery cells on fork equipment VF, the transport of battery cells BC and the stacking process of the battery cells BC by the fork equipment VF are carried out sequentially.

The fork equipment VF is battery cell transporting equipment in which a cell-receiving part VFa with a V-shaped cross-sectional structure is formed, and is configured to transport the battery cells BC mounted on the cell-receiving part VFa to the stacking table. After transporting, the fork equipment VF adds the battery cells BC located on the cell-receiving part VFa to the cell stack being assembled on the stacking table.

In the process of transporting and stacking the battery cells BC using the fork equipment VF, there is a problem with the battery cells BC being damaged by being hit by a fork article. For example, referring to FIG. 1, when the battery cells BC are mounted on the fork equipment VF while relative positions of the fork equipment VF and the battery cells BC are off from the correct positions, there is a risk that the battery cells BC are struck by a sharp edge VFb of the cell-receiving part VFa. In particular, for pouch-type battery cells in which the electrode assembly is housed inside at thin aluminum pouch, there is a problem in which the outer shape of the pouch is deformed or the pouch is damaged due to the edge VFb of the cell-receiving part VFa being struck.

In addition, since the fork equipment VF of an existing battery cell stacking device does not have an element configured to fix the battery cells BC to the cell-receiving parts VFa, there is a risk that the positions of the battery cells BC mounted on the cell-receiving parts VFa may change due to vibration or inertia generated during the movement of the fork equipment VF. Further, as such, when the positions of the battery cells BC inside the fork equipment VF is not maintained consistently, there is a concern that the alignment of the battery cells BC in the cell stack manufactured by the battery cell stacking device would be outside the design specification range.

### Detailed Description of the Invention

### Technical Goals

The present disclosure is conceived to solve at least some of the problems of the prior art as described above, and provides a battery cell stacking system configured to quickly and accurately form a cell stack without damaging battery cells.

### Technical solutions

In order to achieve the above purpose, in example embodiments of the present disclosure, provided is battery cell stacking system including a stacking table on which a cell stack including one or more battery cells is manufactured, a stacking device configured to stack the one or more battery cells on the stacking table, and the stacking device is configured to perform a first operation that is to rotate around a rotation axis connected to the stacking device while the one or more battery cells are mounted, and a second operation that is to move in a direction toward the stacking table to supply the one or more battery cells to the stacking table.

In example embodiments, the battery cell stacking system may further include a supply device configured to supply the one or more battery cells to the stacking device, and the stacking device may be configured to reciprocate between the supply device and the stacking table.

In example embodiments, the supply device may be configured to supply the one or more battery cells in a horizontal state to the stacking device, and the stacking device may be configured to change the one or more battery cells to be in a vertical state through the first operation and supply the one or more battery cells to the stacking table.

In example embodiments, at least one of the supply device and the stacking table may include a conveyor belt structure.

In example embodiments, the stacking device may include a receiving part on which the one or more battery cells are mounted, and the receiving part may be configured to support different surfaces of the one or more battery cells simultaneously.

In example embodiments, the stacking device may further include a suction part configured to suck the one or more battery cells that are mounted on the receiving part.

In example embodiments, in the stacking device, a plurality of receiving parts are arranged in a circumferential direction centered on the rotation axis.

In example embodiments, the receiving part may include a first receiving part configured to support a first surface of the one or more battery cells, and a second receiving part configured to support a second surface that is adjacent to the first surface of the one or more battery cells, wherein the second surface is narrower than the first surface.

In example embodiments, the stacking table may include a guide part configured to receive the one or more battery cells from the stacking device.

In example embodiments, further included may be a position sensor configured to sense a relative height between the second receiving part and an upper surface of the guide part.

In example embodiments, based on position information of the second receiving part and the upper surface of the guide part sensed by the position sensor, an offset between the second receiving part and the guide part may be reduced by moving at least one of the second receiving part and the guide part.

In example embodiments, the battery cell stacking system may further include a vision camera configured to sense positions of the one or more battery cells by photographing the one or more battery cells mounted on the receiving part.

In example embodiments, the stacking device may be configured to perform a third operation to move along a longitudinal direction of the rotation axis based on position information of the one or more battery cells photographed by the vision camera.

In example embodiments, a plurality of stacking devices may be provided along the rotation axis.

In example embodiments, the battery cell stacking system may further include a supply device configured to supply the one or more battery cells in a first direction to the stacking device, and the stacking device is configured to stack the supplied one or more battery cells on the stacking table in a second direction intersecting the first direction.

In example embodiments, the stacking device may be configured to rotate 90 degrees or 180 degrees in a state that the one or more battery cells are mounted.

In example embodiments, provided is a battery cell stacking system including a stacking table on which a cell stack including one or more battery cells is manufactured, a stacking device configured to stack the one or more battery cells on the stacking table, and the stacking device is configured to perform a first operation that is to rotate around a rotation axis connected to the stacking device while the one or more battery cells are mounted, a second operation that is to move in a direction toward the stacking table to supply the one or more battery cells to the stacking table, and a third operation that is to adjust positions of the one or more battery cells by moving in a direction parallel to the rotation axis.

In example embodiments, may be further provided is a vision camera configured to sense the positions by photographing the one or more battery cells mounted on the stacking device, and the stacking device may be configured to perform the third operation based on position information of the one or more battery cells photographed by the vision camera.

In example embodiments, further included may be a guide part that is disposed at the stacking table and configured to receive the one or more battery cells from the stacking device, and a position sensor configured to sense relative positions between the guide part and the stacking device.

### Effects of the Invention

According to the example embodiments, with a battery cell stacking system, it is possible to quickly and safely manufacture a cell stack without damaging battery cells.

According to the example embodiments, with a battery cell stacking system, it is possible to stack battery cells in the correct positions while the battery cells being aligned, and thus a cell stack may be manufactured without distortion of battery cells.

### Brief Description of Drawings

FIG. 1 illustrates an example of an existing battery cell stacking device.
FIG. 2 illustrates an exemplary configuration of a cell stack manufactured by a battery cell stacking system according to example embodiments.
FIG. 3 illustrates a battery cell stacking system according to example embodiments.
FIG. 4 is an example embodiment of a stacking device included in a battery cell stacking system.
FIG. 5 to FIG. 7 are reference drawings for explaining a battery cell stacking method using a battery cell stacking system.
FIG. 8 is a reference drawing for explaining that sense whether an offset occurs between a stacking device and a stacking table.
FIG. 9 illustrates an example embodiment of a displacement sensor included in a battery cell stacking system.
FIG. 10 is a reference drawing explaining the process of aligning the positions of battery cells by the battery cell stacking system.
FIG. 11 illustrates an exemplary configuration of a battery cell stacking system according to another example embodiment.
FIG. 12 illustrates how battery cells are stacked in a battery cell stacking system according to another example embodiment.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, a front side and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described in detail with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

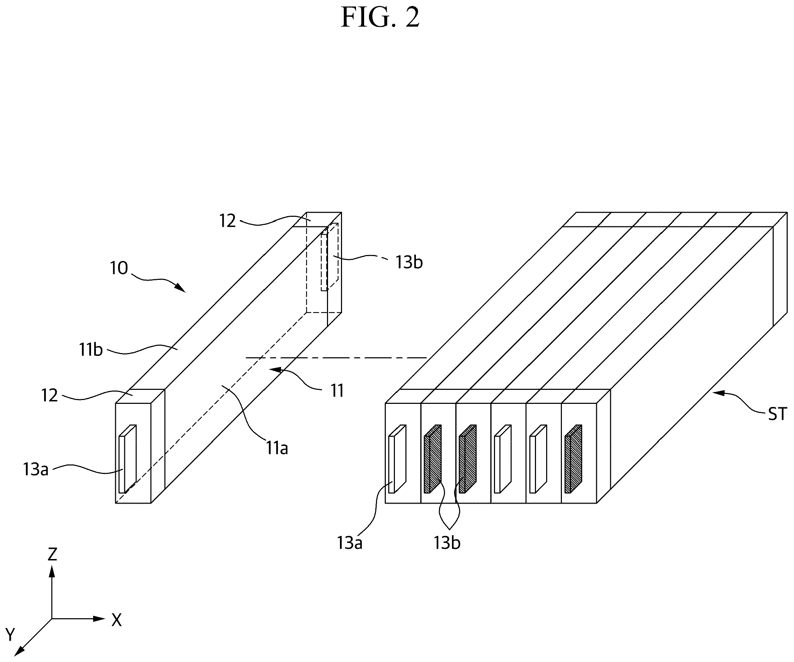

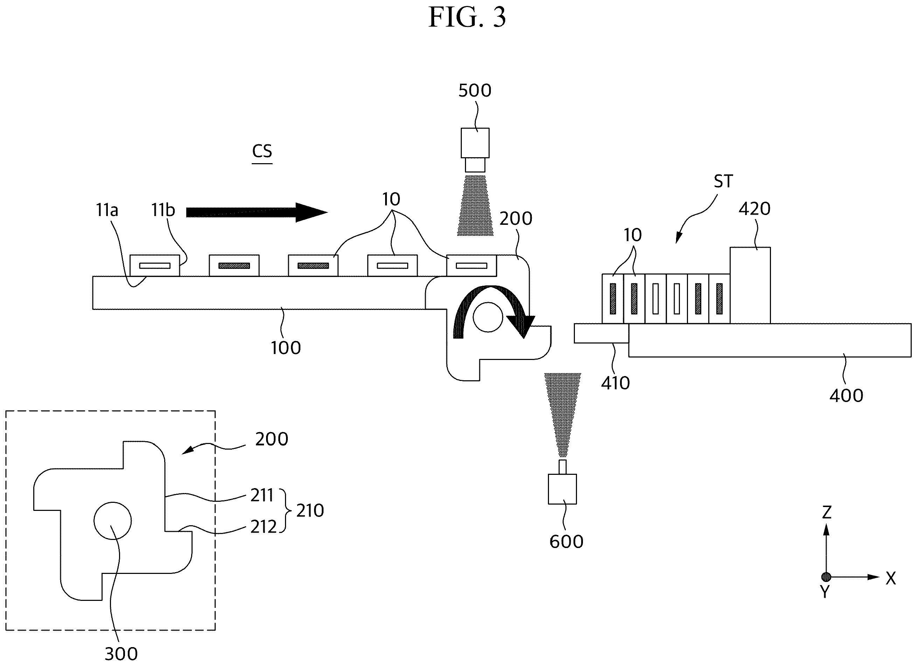

FIG. 2 illustrates an exemplary configuration of a cell stack ST manufactured by a battery cell stacking system CS (for example, of FIG. 3) according to example embodiments.

The battery cell stacking system CS according to example embodiments may stack and assemble a plurality of battery cells 10 in one direction. In the explanation below, the direction in which battery cells 10 are stacked is called the "stacking direction." For example, in the case of the battery cells 10 illustrated in FIG. 2, the stacking direction of the battery cells 10 may correspond to the X-axis direction.

The battery cells 10 stacked by the battery cell stacking system CS may be fixed to each other by an adhesive member (not illustrated) placed between the battery cells 10, so that the stacked state may be maintained. The adhesive member (not illustrated) may be an adhesive or an adhesive tape, but is not limited thereto, and may be composed of anything that may secure battery cells together.

The battery cells 10 used in the battery cell stacking system CS may be pouch-type secondary batteries having a structure in which the electrode assembly is stored inside a flexible pouch.

Referring to FIG. 2, the battery cell 10 may include an electrode accommodation part 11 in which an electrode assembly and an electrolyte are received, metallic lead tabs 13a and 13b electrically connected to the electrode assembly and exposed to the outside of the exterior material, and a sealing portion formed by bonding an exterior material to at least one edge of the electrode accommodation part 11.

The electrode assembly may have a form in which a plurality of positive electrode plates and a plurality of negative electrode plates are stacked with a separator in between. The battery cell 10 may have the plurality of lead tabs 13a and 13b including the first lead tab 13a and the second lead tab 13b, and the first lead tab 13a may be electrically connected to the negative electrode plate, and the second lead tab 13b may be electrically connected to the positive electrode plate. The lead tabs 13a and 13b may be exposed to the outside of the exterior material.

The electrode accommodation part 11 may be formed by forming one or more exterior materials. For example, after one or more storing parts may be formed on one sheet of the exterior material, the exterior material may be folded in order for storing parts to form one space, and the electrode accommodation part 11 may be formed. The exterior material may be formed of a material that may protect the electrode assembly from the external environment, and for example, may be composed of a flexible aluminum laminated film.

The surface of the electrode accommodation part 11 may be composed of a first surface 11a, which is relatively large in area along its perimeter, and a second surface 11b, which is connected to the first surface 11a and has an area smaller than the first surface 11a. For example, the electrode accommodation part 11 may be composed of a pair of first surfaces 11a and a pair of second surfaces 11b followed by the pair of first surfaces 11a. Through the battery cell stacking system CS according to example embodiments, the battery cells 10 may be stacked and arranged such that the first surface 11a of the battery cell 10 is in close contact with the first surface 11a of another battery cell 10.

A terrace part 12 may be formed on both sides of the electrode accommodation part 11. For example, referring to FIG. 2, the terrace part 12 may refer to the area from the edge of electrode accommodation part 11 to before the lead tabs 13a and 13b in the battery cell 10. The terrace part 12 is a part formed by exterior materials being in close contact with each other at the edge of the electrode assembly accommodated in the electrode accommodation part 11, and may be formed at both ends of the longitudinal direction (for example, the Y-axis direction) of the battery cell 10.

However, the battery cell 10 and the cell stack ST illustrated in FIG. 2 are only examples of the battery cell 10 applied to the battery cell stacking system CS according to example embodiments, and the battery cell 10 may be composed of various types other than the pouch-type battery cell 10 described above. For example, the battery cell 10 may be a square battery cell having a structure in which the electrode assembly is housed inside a metal case.

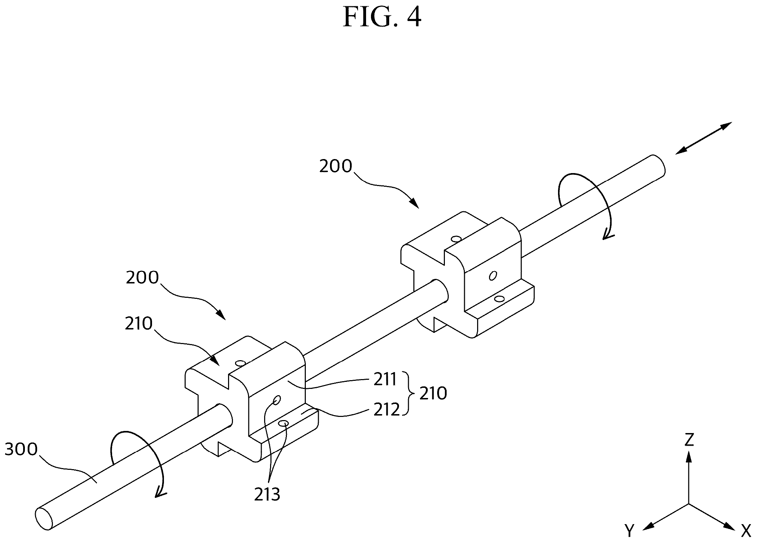

Hereinafter, referring to FIG. 3 and FIG. 4, described is the battery cell stacking system CS according to example embodiments.

FIG. 3 illustrates the battery cell stacking system CS according to example embodiments.

FIG. 4 is an example embodiment of a stacking device 200 included in the battery cell stacking system CS.

The battery cell 10 applied to the battery cell stacking system CS and the cell stack ST manufactured by the battery cell stacking system CS described with reference to FIG. 3 and FIG. 4 correspond to the battery cell 10 and the cell stack ST described with reference to FIG. 2, and thus duplicate descriptions may be omitted.

In example embodiments, the battery cell stacking system CS may include a supply device 100 by which battery cells are supplied, a stacking table 400 on which the battery cells 10 are stacked, and the stacking device 200 for transporting and stacking the battery cells 10 between the supply device 100 and the stacking table 400.

The supply device 100 may be configured to supply the battery cells 10 in a direction approaching the stacking device 200 while the stacking device 200 is positioned to one side of the supply device 100. For example, the supply device 100 may include a conveyor belt, and the battery cells 10 may be mounted on the conveyor belt of the supply device 100 in a horizontal state and supplied to the stacking device 200 positioned on one side of the supply device 100. Here, the "horizontal state" may indicate a state in which the first surface 11a of the electrode accommodation part 11 is mounted or in close contact with the upper surface of the supply device 100 in the battery cell 10. When the upper surface of the supply device 100 is parallel to the horizontal plane, the "horizontal state" of the battery cell 10 may indicate a state in which the first surface 11a of the electrode accommodation part 11 is parallel to the horizontal plane. For example, referring to FIG. 3, the battery cell 10 may be transported along the upper surface of the supply device 100 in the horizontal state and supplied to the stacking device 200.

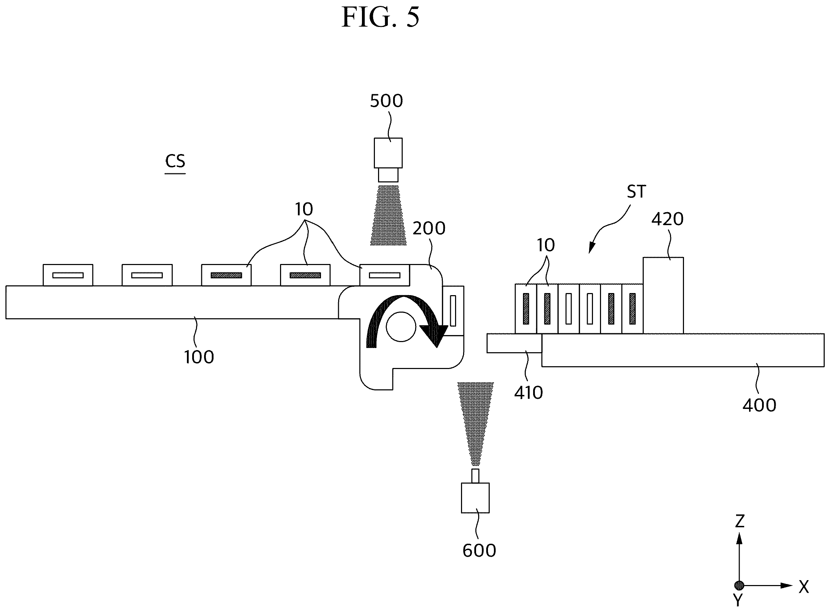

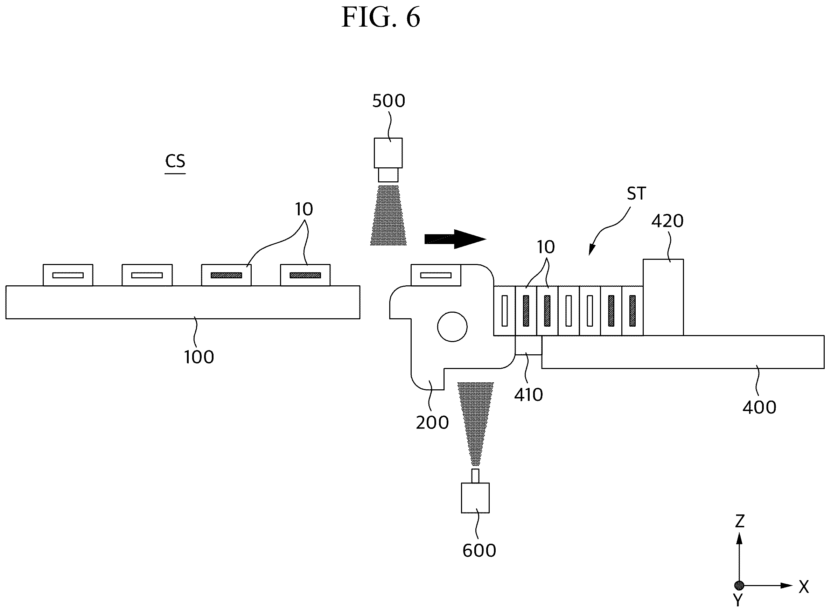

The stacking device 200 may be configured to transport the battery cells 10 supplied from the supply device 100 to the stacking table 400, and to stack the battery cells 10 on the stacking table 400. For this, the stacking device 200 may be configured to perform a first operation (see FIG. 5) in which the stacking device 200, with the battery cell 10 seated thereon, rotates about a rotation axis 300 connected to the stacking device 200, and a second operation (see FIG. 6) in which the stacking device 200 transports the battery cells 10 toward the stacking table 400 and supplies the battery cells 10 to the stacking table 400. Below, the structure and operation of the stacking device 200 are described in more detail.

Referring to FIG. 3, the stacking device 200 may have one or more receiving parts 210 on which the battery cells 10 are mounted.

A single receiving part 210 may be configured in order for different surfaces, or, a plurality of surfaces, of the battery cell 10 to be mounted and supported. For example, referring to FIG. 3, the single receiving part 210 may include a first receiving part 211 where the first surface 11a of the battery cell 10 is mounted and a second receiving part 212 where the second surface 11b of the battery cell 10 is mounted. The angle between the first receiving part 211 and the second receiving part 212 may be approximately vertical.

In the battery cell 10, the first surface 11a may be wider than the second surface 11b, and correspondingly, the area of the first receiving part 211 of the stacking device 200 may be larger than the area of the second receiving part 212.

The battery cell 10 transported from the supply device 100 to the stacking device 200 may be mounted in the horizontal state on the receiving part 210 of the stacking device 200. For example, the battery cell 10, transported from the supply device 100 to horizontal state, may be mounted on the stacking device 200, while the first surface 11a being in contact with the first receiving part 211 of the stacking device 200 and the second surface 11b being in contact with the second receiving part 212 of the stacking device 200.

The stacking device 200 is connected to the rotation axis 300 and may rotate as the rotation axis 300 rotates. For example, the rotation axis 300 may rotate under the user control by being connected to a motor that is configured to control the rotation speed and rotation direction. For example, referring to FIG. 3, while the battery cell 10 supplied from the supply device 100 being mounted on the receiving part 210, the stacking device 200 may rotate clockwise or counterclockwise around the rotation axis 300.

By this rotational drive, the stacking device 200 may supply the battery cells 10 supplied in the horizontal state to the stacking table 400 in a vertical state. Here, the "vertical state" may indicate a state in which the second surface 11b of the electrode accommodation part 11 is perpendicular to the vertical direction in the battery cell 10 (in other words, a state parallel to the horizontal state).

The stacking device 200 may have a structure in which the plurality of receiving parts 210 on which battery cells 10 are mounted are arranged along the direction of the circle centered on the rotation axis 300. Accordingly, the stacking device 200 may move the battery cells 10 to the stacking table 400 while each of two or more battery cells 10 being mounted on different receiving parts.

In order to transport and stack the battery cells 10 more stably, the plurality of stacking devices 200 may be disposed on one rotation axis 300 in the battery cell stacking system CS according to example embodiments. For example, referring to FIG. 4, two or more stacking devices 200 may be disposed that are spaced apart from each other in a longitudinal direction of the rotation axis 300 (for example, the Y-axis direction of FIG. 3) along the one rotation axis 300. Here, the longitudinal direction of the rotation axis 300 may be parallel to the longitudinal direction of the battery cells 10 supplied to the stacking devices 200. The plurality of stacking devices 200 may support different parts of the battery cells 10 to stably transport and stack the battery cells 10.

However, the structure or shape of the stacking device 200 of the battery cell stacking system CS according to example embodiments is not limited to what is illustrated in FIG. 4. For example, in the battery cell stacking system CS, only one stacking device 200 may be disposed on the rotation axis, or three or more may be disposed.

A suction part 213 configured to suck the first surface 11a or the second surface 11b of the battery cell 10 may be disposed on the receiving part 210 of the stacking device 200. For example, the suction part 213 is disposed on at least one of the first receiving part 211 and the second receiving part 212, and may suck on at least one of the first surface 11a and the second surface 11b.

The suction part 213 has a hole structure formed on the surface on which the battery cells 10 are mounted in the receiving part 210, and may be configured to draw air into the hole. In other words, with the battery cells 10 mounted on the receiving parts 210, the suction part 213 may suck in air and the battery cells 10 may be tightly fixed to the receiving parts 210. The battery cells 10 may be sucked by the suction part 213, and after the battery cells 10 are mounted on the receiving parts 210, the stable mounted state may be maintained.

After the battery cells 10 are moved to the stacking table 400, the suction operation of the suction part 213 may be stopped, and accordingly, the battery cells 10 may be easily separated from the receiving part 210.

The battery cell stacking system CS may further include one or more vision cameras 500 configured to sense the position of the battery cell 10 mounted on the stacking device 200 and a first controller (not illustrated) configured to control the stacking device 200 based on position information of the battery cell 10 collected through the vision cameras 500. For example, referring to FIG. 3, the vision camera 500 is disposed on the top of the stacking device 200 and may obtain image information about the battery cell 10 mounted on the stacking device 200, and may generate position information of the battery cell 10 base on the obtained image information (image data).

Based on the position information of the battery cell 10 obtained through the vision camera 500, the first controller (not illustrated) may adjust the position of the battery cell 10 by moving the stacking device 200. For example, when the stacking device 200 moves in the longitudinal direction of the rotation axis 300 (for example, the Y-axis direction in FIG. 3 and FIG. 4), the battery cell 10 mounted on the stacking device 200 may also move in the longitudinal direction of the rotation axis 300, and may be adjusted to a preset correct position. As such, the movement of the stacking device 200 in the longitudinal direction of the rotation axis 300 is called the third operation of the stacking device 200.

In other words, the stacking device 200, according to embodiments, may be configured to perform a first operation of rotating around the rotation axis 300, a second operation of moving from the supply device 100 to the stacking table 400, and a third operation of moving in the longitudinal direction of the rotation axis 300.

Each of the first operation, the second operation and the third operation of the stacking device 200 may be performed independently. The first controller (not illustrated) may independently control the first operation, the second operation and the third operation of the stacking device 200. The order of execution of the first operation, the second operation and the third operation of the stacking device 200 is not particularly restricted, and while one operation (for example, the first operation) is being performed, another operation (for example, the third operation) may be performed.

Accordingly, the stacking device 200 may accurately adjust the position of the battery cell 10 and stack the battery cell 10 at an accurate position on the stacking table 400.

The stacking table 400 is a workbench where the battery cells 10 are stacked and assembled. The battery cells 10 transported through the stacking device 200 may be stacked and assembled in one direction on the stacking table 400.

The stacking table 400 may further include a support 420 supporting one side of the cell stack ST, and a guide part 410 that protrudes in the direction from the stacking table 400 to the stacking device 200 and receives the battery cell 10 from the stacking device 200.

The support 420 of the stacking table 400 may prevent the cell stack ST from collapsing or moving out of the correct position, by supporting one side of the cell stack ST. The support 420 may be configured to move in the stacking direction (for example, the X-axis direction of FIG. 3) as the battery cell 10 continues to be stacked.

In order for the battery cell 10 to be stably mounted, the guide part 410 may have one or more suction parts (not illustrated) of its upper surface. In the following description, for the distinction from the suction part 213 of the stacking device 200, the suction part 213 of the stacking device 200 is called the first suction part 213, and the suction part of the guide part 410 is called the second suction part.

The second suction part may have a hole structure disposed on the upper surface of the guide part 410, and may be configured to suck air. In other words, while the battery cell 10 is mounted on the guide part 410, the suction part 213 may suck in air to secure the battery cell 10 tightly to the guide part 410.

The second suction part may suck the second surface 11b of the battery cell 10. Accordingly, the battery cell 10, which has been switched to be a vertical state in the stacking device 200, may be stably mounted in the vertical state on the upper surface of the guide part 410.

With the battery cell 10 being mounted on the upper surface of the guide part 410, the stacking device 200 moves horizontally toward the stacking table 400 and press the battery cell 10 mounted on the guide part 410 to the cell stack ST.

At least a part of the stacking table 400 may have a conveyor belt structure, and as the battery cell 10 is sequentially added to the cell stack ST, the stacking table 400 may transport the cell stack ST in one direction a distance corresponding to the width of the additional battery cell 10.

In the process of the guide part 410 receiving the battery cell 10 from the stacking device 200, if there is an offset between the guide part 410 and the stacking device 200, or the height difference in the Z-axis direction, there is a risk of the damage or injury to the battery cell 10. In order to prevent this, the battery cell stacking system CS may further include one or more displacement sensors 600 configured to sense relative positions of the stacking device 200 and the guide part 410, specifically the relative height. Based on the sensed information (for example, position information) of the stacking device 200 and the guide part 410 sensed through the displacement sensor 600, at least one of the stacking device 200 and the guide part 410 may be moved to eliminate the offset between the stacking device 200 and the guide part 410.

Further, when an offset is sensed between the guide part 410 and the stacking device 200, the battery cell stacking system CS may be configured to stop the movement of the stacking device 200 and provide information (for example, offset occurrence notification information or position information and so on) about the offset to the user. After then, the user may eliminate the offset by appropriately adjusting the relative positions or the height of the guide part 410 of the stopped stacking device 200, and then restart the battery cell stacking system CS to continue stacking the battery cells 10.

Below, the process of stacking the battery cells 10 by the battery cell stacking system CS is described in more detail with reference to FIG. 3, FIG. 5 to FIG. 9.

FIG. 5 to FIG. 7 are reference drawings for explaining a method of stacking battery cells in the battery cell stacking system CS.

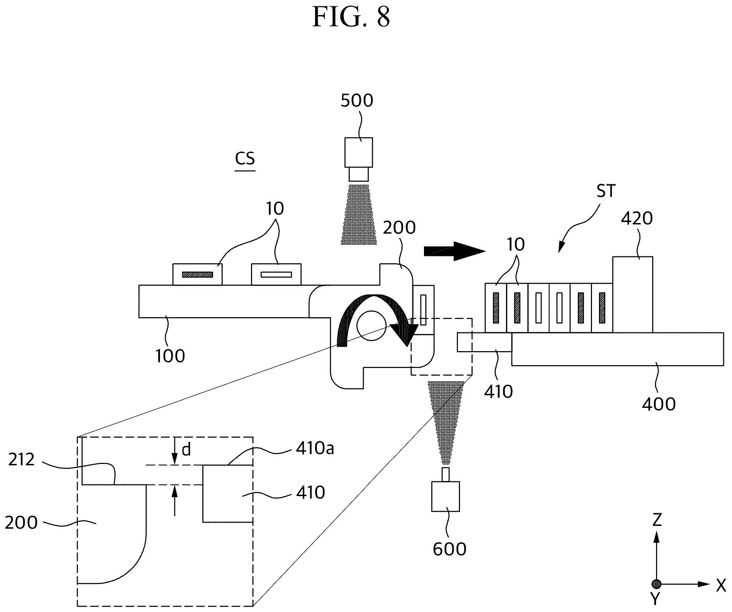

FIG. 8 is a reference drawing for explaining the displacement sensor 600 that senses whether an offset d between the stacking device 200 and the stacking table 400 occurs.

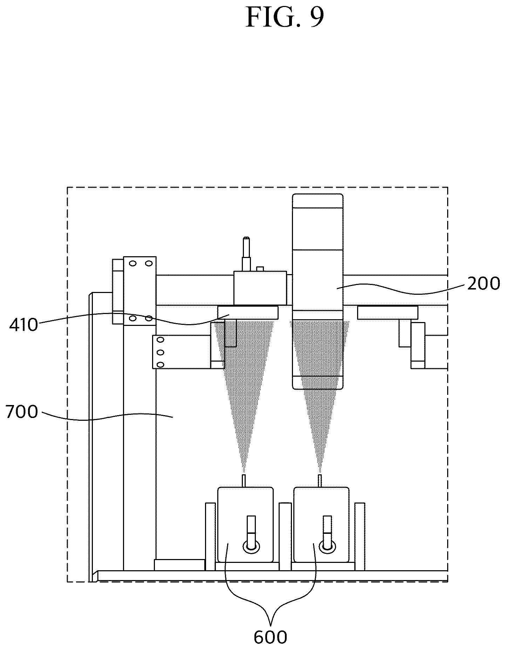

FIG. 9 illustrates an example embodiment of the displacement sensor 600 included in the battery cell stacking system CS.

The battery cell stacking system CS described with reference to FIG. 5 to FIG. 9 corresponds to the battery cell stacking system CS described previously with reference to FIG. 3, and thus duplicate descriptions may be omitted.

First, referring to FIG. 3 and FIG. 5, in the supplying operation, the stacking device 200 is positioned on one side of the supply device 100, and the supply device 100 supplies the battery cell 10 to the stacking device 200. Here, the battery cell 10 may be disposed in the horizontal state on the supply device 100 and may be transported toward the stacking device 200 along the upper surface of the supply device 100.

In the mounting operation, the battery cell 10 supplied to the stacking device 200 may be mounted on the receiving part 210 of the stacking device 200. For example, the battery cell 10 may be mounted while the electrode accommodation part 11 being in contact with the first receiving part 211 or the second receiving part 212 of the stacking device 200. While the battery cell 10 being mounted, the first suction part 213 of the receiving part 210 sucks the battery cell 10 and fixes the battery cell 10 in order to prevent the battery cell 10 from being detached from the receiving part 210.

In the position aligning operation, the vision camera 500 (for example, a first sensor) may obtain sensed information about the battery cell 10 mounted on the receiving part 210. For example, the vision camera 500 may obtain image information of the battery cell 10 mounted on the receiving part 210, and based thereon may generate position information of the battery cell 10. The stacking device 200 may perform the third operation of adjusting the position of the battery cell 10 based on the sensed information (for example, the position information). For example, when the center of the battery cell 10 is shifted to one side compared to the reference position according to the position information of the battery cell 10, the stacking device 200 may be driven to move from one side to the other side in order for the center of the battery cell 10 to be positioned at the reference position.

In the rotating operation, the stacking device 200 may perform a first operation of rotating around the rotation axis 300 with the battery cells 10 mounted thereon. Accordingly, the battery cell 10 mounted in the horizontal state on the receiving part 210 may be rotated and oriented to be in the vertical state together with the stacking device 200. Since the first suction part 213 sucks the battery cell 10 mounted on the receiving part 210, and thus while the stacking device 200 rotates, the battery cell 10 may be stably fixed to the stacking device.

In example embodiments, the mounting operation and the rotating operation may be performed alternately and repeatedly. For example, referring to FIG. 3 and FIG. 5, after one battery cell 10 is mounted on the receiving part 210 of the stacking device 200, the stacking device 200 may rotate approximately 90 degrees, and then another battery cell 10 may be mounted on another receiving part 210 of the stacking device 200. Accordingly, the plurality of battery cells 10 may be mounted simultaneously on the stacking device 200.

In example embodiments, the plurality of battery cells 10 may be mounted in the stacking device 200, and in this case, the supply device 100 may be repeatedly stopped and restarted over the supplying operation to the rotating operation. For example, the supply device 100 may operate the conveyor belt to supply the battery cells 10 to the receiving part 210 of the stacking device 200, and stops operation of the conveyor belt once the battery cell 10 is positioned on the receiving part 210. After then, while the stacking device 200 rotates and is ready to supply the battery cell 10 to another empty receiving part 210, the conveyor belt resumes operation again, and the battery cell 10 is supplied to the another receiving part 210. As such, after sequentially supplying the plurality of battery cells 10 to each receiving part 210, the supply device 100 stops operating, and the stacking device 200 adds the battery cell 10 to the cell stack ST of the upper surface of the stacking table 400 and then returns to one side of the supply device 100, and then resumes operation and supplies the battery cell 10 to the stacking device 200.

However, the mounting operation, the position aligning operation and the rotating operation are not limited to the described operations. For example, the position aligning operation and the rotating operation may also be performed in a state that only one battery cell 10 is mounted on the receiving part 210 through the mounting operation.

Referring to FIG. 6, the stacking device 200 may perform the second operation in which the stacking device 200 moves toward the stacking table 400 and transports the battery cell 10 to the stacking table 400. Here, the direction in which the stacking device 200 moves while performing the second operation may be the direction that is perpendicular to the longitudinal direction of the rotation axis 300.

The battery cells 10 transported by the stacking device 200 may be mounted in the vertical state on the guide part 410 of the stacking table 400. The second suction part disposed in the guide part 410 may suck the battery cells 10 in order for the battery cells 10 to be stably mounted on the guide part 410 in the vertical state.

Referring to FIG. 6, FIG. 8 and FIG. 9, before the stacking device 200 supplies the battery cells to the guide part 410 in the transporting operation, the position sensor 600 (for example, the second sensor) may sense the position of the stacking device 200 and the guide part 410 to identify whether the offset d is formed between the receiving part 210 of the stacking device 200 and an upper surface 410a of the guide part 410.

When the vertical offset d occurs between the second receiving part 212 of the receiving part 210 of the stacking device 200 and the upper surface 410a of the guide part 410, in the process of transporting the battery cell 10 from the stacking device 200 to the guide part 410, in other words, in the process of the stacking device 200 placing the battery cell 10 on the guide part 410 or in the process of the stacking device 200 moving horizontally toward the stacking table 400, there is a risk that the battery cell 10 or the cell stack ST being manufactured is struck by the edge of the guide part 410 or the edge of the stacking device 200.

In order to prevent this, the battery cell stacking system CS may adjust the relative positions of the stacking device 200 and the guide part 410 by using one or more displacement sensors 600 configured to sense the relative positions of the stacking device 200 and the guide part 410.

For example, referring to FIG. 8, the displacement sensor 600 may be installed at the bottom of the stacking table 400 to be configured to sense the positions of the guide part 410 and the stacking device 200. Based on the sensed information of the guide part 410 and the stacking device 200 sensed by the displacement sensor 600, the battery cell stacking system CS may adjust the relative positions of the stacking device 200 and the guide part 410 in order to prevent the offset d from occurring between the second receiving part 212 of the stacking device 200 and the upper surface 410a of the guide part 410.

Alternatively, the battery cell stacking system CS may be configured to stop moving to the stacking device 200 when the offset is sensed between the guide part 410 and the stacking device 200, and to provide the information thereon to the user. After then, the user may resolve the offset by appropriately adjusting the position or the height of the stopped stacking device 200, and then restart the battery cell stacking system CS to continue stacking the battery cells 10.

In example embodiments, one or more position sensors 600 may be provided in the battery cell stacking system CS. For example, referring to FIG. 9, the plurality of position sensors 600 may be installed, and may sense a position of each of the guide part 410 and the stacking device 200. For example, the plurality of position sensors 600 may be installed on a lower surface of an operation frame 700 on which the stacking table 400 is installed, and may sense a height level of each of the guide part 410 and the receiving part 210 of the stacking device 200.

The battery cell stacking system CS may further include a second controller (not illustrated) configured to control relative positions of the stacking device 200 and the guide part 410 based on the position information sensed by the position sensor 600. The second controller (not illustrated) may be a separate element distinct from the first controller (not illustrated). However, the first controller (not illustrated) and the second controller (not illustrated) may be integrated into a single, unified controller (not illustrated).

The second controller (not illustrated) may have position information about the state there is no offset d between the receiving part 210 and the upper surface 410a of the guide part 410, and may identify whether the offset d occurs, by comparing the position information sensed by the position sensor 600 (hereinafter, a current position information) with the reference position information.

When the offset d occurs, the second controller (not illustrated) may move the stacking device 200 or the guide part 410 in order for the current position information to match the reference position information. Through the feedback control, the stacking device 200 may mount the battery cell 10 on the upper surface 410a of the guide part 410 while the second receiving part 212 and the upper surface 410a of the guide part 410 are positioned on the same plane, and accordingly, the battery cell 10 may be prevented from being caught or damaged during transport from the stacking device 200 to the guide part 410.

As such, based on the position information derived by the position sensor 600, the relative positions of the stacking device 200 and the guide part 410 may be adjusted to eliminate the offset d. Accordingly, the battery cell 10 is safely mounted on the guide part 410 with no offset d between the upper surface of the receiving part 210 and the guide part 410.

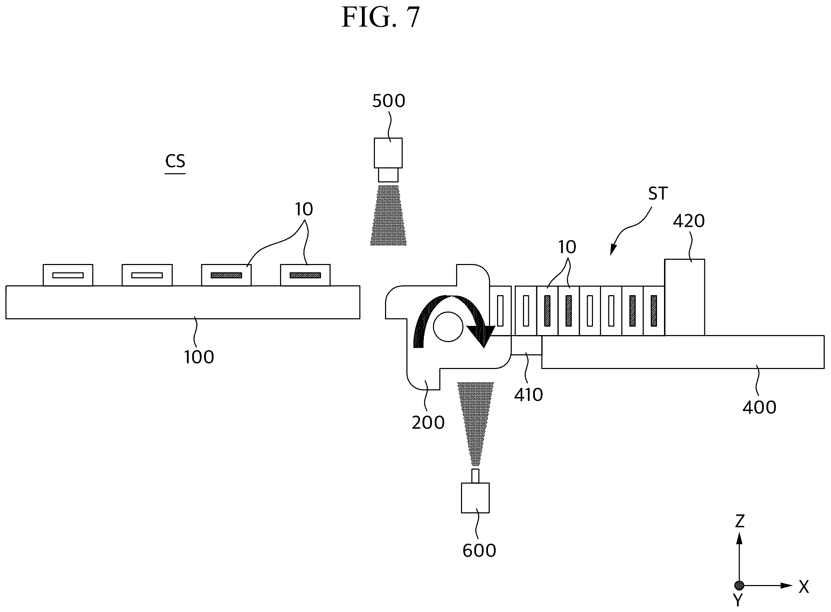

Referring to FIG. 6 and FIG. 7, in the stacking operation, the stacking device 200 continues to move toward the stacking table 400 and presses the battery cell 10 mounted on the guide part 410 in order for the battery cell 10 to be attached to the cell stack ST of the support 420. An adhesive member (not illustrated) may be disposed on the first surface 11a facing the support 420 in the battery cell 10, and accordingly, the battery cell 10 may be stacked and fixed on the cell stack ST that is in the process of being assembled.

When the stacking device 200 transports the plurality of battery cells 10 together, in the stacking operation, the stacking device 200 may add each of the plurality of battery cells 10 mounted on each receiving part 210 to the cell stack ST. For example, referring to FIG. 6 and FIG. 7, the stacking device 200 may perform the stacking operation with two or more battery cells 10 in the state of being mounted, and the stacking device 200 after adding one battery cell 10 to the cell stack ST, the stacking device 200 may be rotated again to add the battery cells 10 mounted on other receiving parts 210 to the cell stack ST. As such, by sequentially stacking the battery cells 10 mounted on the plurality of receiving parts 210, the assembly speed for assembling the cell stack ST may be increased.

Meanwhile, the position aligning operation may be performed separately in the mounting operation, the rotating operation, the transporting operation and the stacking operation. For example, the vision camera 500 may collect image information of the battery cell 10 that is mounted in the mounting operation, and may store the image information by converting the image information to first position information. In the rotating operation, the vision camera 500 may collect image information of the battery cell 10 mounted on another receiving part 210, and may convert the image information into second position information and store. In the transporting operation and the stacking operation, the stacking device 200 may adjust the position of each battery cell 10 based on the stored first position information and the stored second position information, and mount the battery cell 10 onto the guide part 410.

As such, the battery cell stacking system CS may manufacture the cell stack ST by stacking the plurality of battery cells 10 by performing the supplying operation, the mounting operation, the position aligning operation, the rotating operation, the transporting operation and the stacking operation.

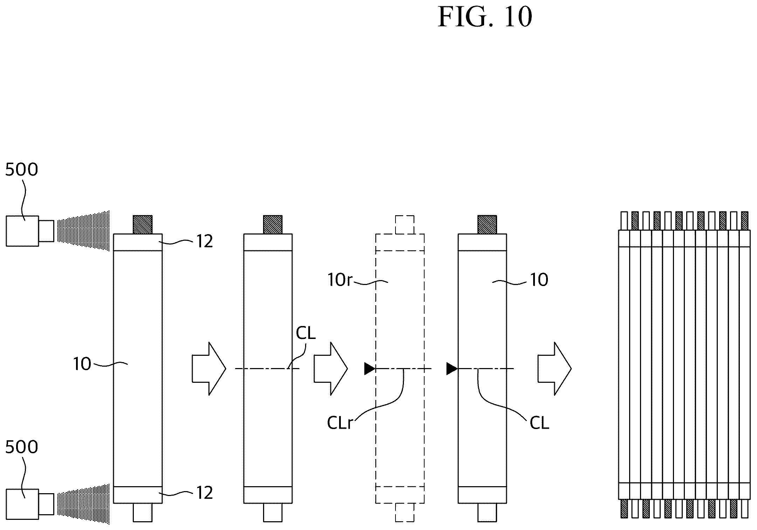

Below, the position aligning operation performed in the battery cell stacking system CS is described in detail with reference to FIG. 3 and FIG. 10 together.

FIG. 10 is a reference drawing for explaining the process of aligning the positions of the battery cells 10 by a battery cell stacking system.

The battery cell stacking system described in FIG. 10 corresponds to the battery cell stacking system CS described in FIG. 3, and thus duplicate descriptions may be omitted.

In the process of supplying the battery cells 10 from the supply device 100 to the stacking device 200, there is a concern that the battery cell 10 may be supplied biased to one side from the correct position, and when the battery cell 10 is stacked without position correction, the problem occurs where the alignment of the cell stack ST is misaligned.

To avoid these problems, the battery cell stacking system CS according to example embodiments may identify the position information of the battery cell 10 through the vision camera 500, and adjust the position of the battery cell 10 by moving the stacking device 200 based on the position information.

Referring to FIG. 3 and FIG. 10, in the battery cell stacking system CS, the plurality of vision cameras 500 may be installed and photograph different parts of the battery cell 10 and process them into image information. For example, each of the vision cameras 500 may capture the positions of both edges of the battery cell 10 by taking pictures of the terrace part 12 on both sides of the battery cell 10, and based thereon derive the coordinate values of a center line CL of the battery cell 10. Here, based on the longitudinal direction of the battery cell 10 (for example, the Y-axis direction in FIG. 3), the center line CL may be an imaginary line on the position that is the center of the battery cell 10.

Referring to FIG. 10, the first controller (not illustrated) adjusts the position of the battery cell 10 in order for the two coordinate values to match each other, by comparing a coordinate value of the center line CL derived using the vision camera 500 with a coordinate value of the center line when the battery cell 10 is in the correct position (hereinafter, the reference position).

More specifically, the first controller (not illustrated) has information about the reference position of the battery cell 10, that is information about a reference center line CLr of a reference battery cell 10r, and may control the stacking device 200 in order for the two center lines CL and CLr to coincide with each other by comparing the reference center line CLr and the center line CL of the battery cell 10 derived through the vision camera 500. For example, when the center line CL of the battery cell 10 is shifted to the left by the first space compared to the reference center line CLr, the stacking device 200 moves as much as the first space to the right while supporting the battery cell 10. Accordingly, the battery cell 10 may be laminated and assembled with the center line CL positioned in the correct position.

If needed, the battery cell stacking system CS may further include a marking member configured to mark the center line CL of the battery cell 10. For example, a marking member may display the center line CL of the battery cell 10 in order for the center line CL to be recognized with the naked eye, by laser marking at least a part of the center line CL along the center line CL of the battery cell 10 derived by the vision camera 500. Accordingly, a worker or a user may quickly and intuitively identify whether the battery cells 10 are misaligned in the cell stack ST.

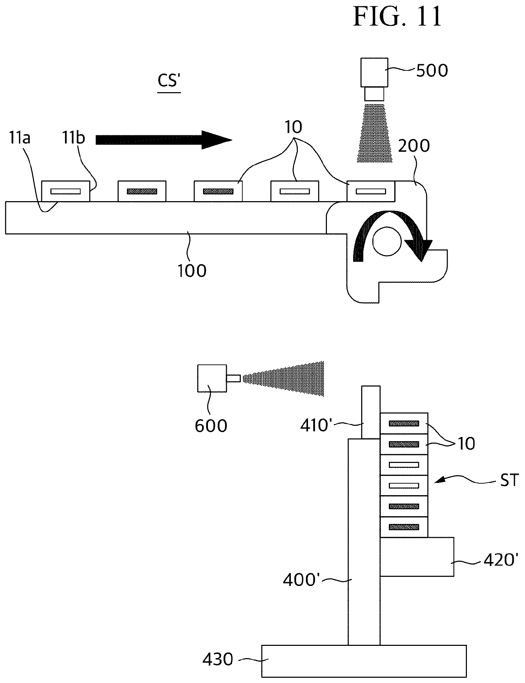

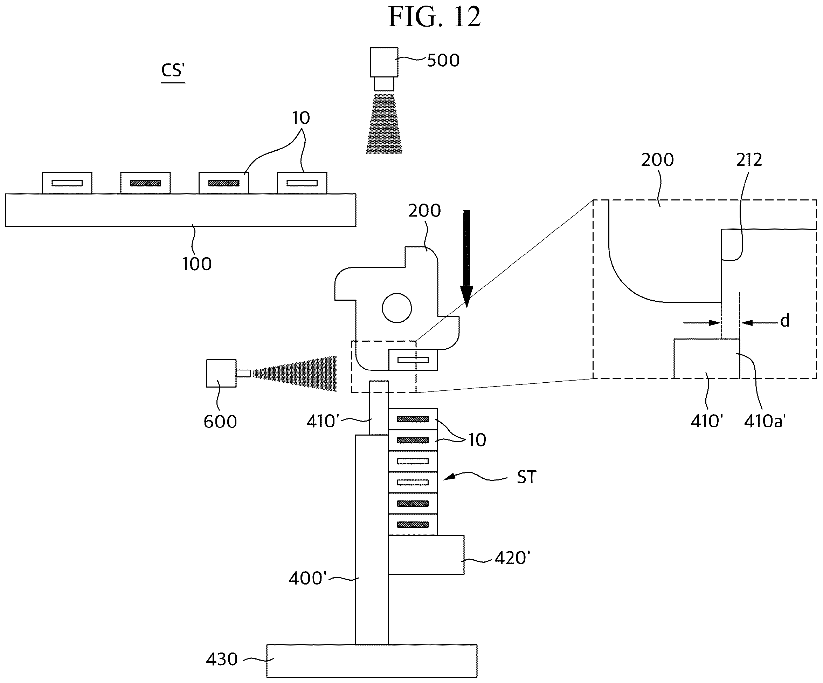

Meanwhile, in the battery cell stacking system, the manner of stacking battery cells may be set in various ways other than the manner described above. Below, a battery cell stacking system according to another example embodiment is described, with reference to FIG. 11 and FIG. 12.

FIG. 11 illustrates an exemplary configuration of a battery cell stacking system CS' according to another example embodiment.

FIG. 12 illustrates the battery cells 10 being stacked in the battery cell stacking system CS' according to another example embodiment.

In another example embodiment, the stacking device of the battery cell stacking system CS' may be configured to stack battery cells supplied in a first direction along a second direction that intersects (or, that is perpendicular to) the first direction. For example, referring to FIG. 11 and FIG. 12, the supply device 100 may supply the battery cells 10 horizontally to the stacking device 200, and the stacking device 200 may rotate while the battery cell 10 is mounted, and then may transport the battery cell to a stacking table 400' and stack the battery cell in a vertical direction. Here, the "vertical direction" may indicate a direction perpendicular to the horizontal plane, or the vertical direction in the working environment where the battery cell stacking system CS' is deployed.

The supply device 100, which supplies the battery cells 10 to the stacking device 200, includes all the features of the supply device 100 described above through FIG. 3 to FIG. 8, and for a detailed explanation of this, reference may be made to FIG. 3 to FIG. 8.

In order to stack the battery cells 10 in the vertical direction on the stacking table 400', the stacking device 200 may rotate more than 90 degrees while the battery cells 10 are mounted. For example, referring to FIG. 11 and FIG. 12, the stacking table 400' may be disposed under the supply device 100, and the stacking device 200 may rotate approximately 180 degrees after receiving the battery cell 10 from the supply device 100 to align the battery cells 10 toward the stacking table 400'.

In the process of receiving the battery cells 10 and aligning the battery cells 10 toward the stacking table 400', the stacking device 200 may adjust the longitudinal position of the battery cell 10 to correspond to the reference position based on the position information of the battery cells 10 collected through the vision camera 500. Regarding the position alignment of the battery cell 10 through the vision camera 500, the descriptions on FIG. 10 above may be referred to.

The stacking device 200 may stack the battery cells 10 on the stacking table 400' by moving toward the stacking table 400' from the supply device 100.

The stacking table 400' may be provided to extend vertically from a base part 430. The stacking device 200 may stack the battery cells 10 in the parallel direction on one side of the stacking table 400'.

For the stacking table 400', a support 420' may be disposed to support the lower part of the cell stack ST manufactured by stacking, and a guide part 410' may be disposed to support the battery cells 10 that is transmitted from the stacking device 200.

The support 420' may support one side of the cell stack ST. The support 420' may be configured to move downwards according to that the battery cells 10 are added from the stacking device 200. For example, the stacking table 400' may be composed of a conveyor belt type that may move the cell stack ST and the support 420'. With the addition of the battery cell 10 to the cell stack ST, the support 420' may move downwards along with the cell stack ST along the stacking table 400'.

The stacking table 400' may guide the battery cells 10 to be stacked in the correct position through the guide part 410'. If needed, a suction part (not illustrated) configured to support the battery cell 10 by sucking the surface of the battery cell 10 may be provided in the guide part 410'.

When there is the offset d between the guide part 410' and the stacking device 200, there is a risk of damage or marking on the battery cell 10. In order to prevent this, the battery cell stacking system CS' may further include one or more position sensors 600 configured to sense the relative positions of the stacking device 200 and the guide part 410'. For example, referring to FIG. 12, before the stacking device 200 supplies the battery cell to the guide part 410' in the transporting operation, the position sensor 600 may sense the positions of the stacking device 200 and the guide part 410 to identify whether the offset d is formed between a receiving part 210' of the stacking device 200 and the upper surface 410a' of the guide part 410'.

Based on the position information of the stacking device 200 and the guide part 410 sensed by the position sensor 600, at least one of the stacking device 200 and the guide part 410 may be moved to eliminate the offset d between the stacking device 200 and the guide part 410'. Alternatively, the battery cell stacking system CS' may be configured to stop the stacking device 200 when the offset d is sensed between the guide part 410' and the stacking device 200, and provide the information thereon to the user. After then, the user may resolve the offset d by appropriately adjusting the position of the stopped stacking device 200, and then start the battery cell stacking system CS' again to continue stacking the battery cells 10.

After stacking the battery cells 10 is completed, for subsequent processes such as connecting the cell stack ST and the busbar assembly, it may be necessary to realign the position of the cell stack ST. For this, the stacking table 400' may be rotated about the base part 430 to align the cell stack ST in the horizontal direction, in order for the follow-up processes to be carried out efficiently.

In example embodiments, the specific shape of the stacking table 400' is not limited to that shown in the drawing, and may be provided in any shape as long as the structure may stably support the battery cells 10 so that the battery cells 10 may be stacked in the vertical direction.

By using the stacking device 200 configured for rotational driving, the battery cell stacking system CS' may quickly stack the battery cells 10 supplied in the first direction in the second direction intersecting first direction. In other words, without a separate pick-up transporting member configure to pick up the supplied battery cells 10, the cell stack ST may be quickly and efficiently manufactured by naturally mounting the battery cells on the rotating stacking device 200 and then through the rotation and elevation of the stacking device, in the process of supplying the battery cell 10.

As such, since the battery cell stacking system CS' is configured to stack the battery cells 10 in the vertical direction, in the production of the cell stack ST, stacking operation may be performed more efficiently by utilizing the load of the battery cells 10. For example, as the battery cells 10 are gradually stacked in the vertical direction, since the additional battery cell 10 pressurizes the battery cells stacked underneath, even though the pressure exerted by the stacking device 200 on the cell stack ST is not large, the battery cells 10 may be stably stacked vertically.

Meanwhile, in the battery cell stacking system CS' described in FIG. 11 and FIG. 12, with regard to the effect of synergy in cell stack alignment by the vision camera 500 and the position sensor 600, reference may be made to the descriptions with reference to FIG. 3 to FIG. 8 above.

The battery cell stacking system CS according to the example embodiments may have a simpler structure by omitting elements such as existing fork equipment.

Further, according to the battery cell stacking system CS according to the example embodiments, elements having sharp edges, such as those of existing fork equipment, may be omitted, and the cell stack ST may be safely manufactured without damaging the battery cells 10 by adopting the rotating stacking device 200 that allows the battery cells 10 to be naturally mounted and transported in the transporting operation.

Further, according to the battery cell stacking system CS according to the example embodiments, the cell stack ST without distortion of the battery cell 10 may be manufactured in which the position of the battery cell 10 is precisely sensed, and the battery cell 10 is stacked while being aligned in the correct position.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described example embodiment may be implemented with some elements deleted, and each example embodiment may be implemented in combination with each other.

### [Description of Reference Numerals]

10...Battery cell; 11... Electrode accommodation part;
12... Terrace part; 13a, 13b...Lead tabs;
100...Supply device; 200...Stacking device;
210...Receiving part; 300...Rotation axis;
400...Stacking table; 410... Guide part;
420...Support; 500...Vision camera;
600...position sensor; ST...Cell stack;
CS...Battery cell stacking system; CL... Center line

## Claims

1. A battery cell stacking system comprising;
a stacking table on which a cell stack comprising one or more battery cells is manufactured; and
a stacking device configured to stack the one or more battery cells on the stacking table,
wherein the stacking device is configured to perform:
a first operation that is to rotate around a rotation axis connected to the stacking device while the one or more battery cells are mounted; and
a second operation that is to move in a direction toward the stacking table to supply the one or more battery cells to the stacking table.

2. The battery cell stacking system of claim 1, further comprising a supply device configured to supply the one or more battery cells to the stacking device,
wherein the stacking device is configured to reciprocate between the supply device and the stacking table.

3. The battery cell stacking system of claim 2, wherein the supply device is configured to supply the one or more battery cells in a horizontal state to the stacking device,
wherein the stacking device is configured to change the one or more battery cells to be in a vertical state through the first operation and supply the one or more battery cells to the stacking table.

4. The battery cell stacking system of claim 2, wherein at least one of the supply device and the stacking table comprises a conveyor belt structure.

5. The battery cell stacking system of claim 1, wherein the stacking device comprises a receiving part on which the one or more battery cells are mounted,
wherein the receiving part is configured to support different surfaces of the one or more battery cells simultaneously.

6. The battery cell stacking system of claim 5, wherein the stacking device further comprises a suction part configured to suck the one or more battery cells that are mounted on the receiving part.

7. The battery cell stacking system of claim 5, wherein the stacking device comprises a plurality of receiving parts arranged in a circumferential direction centered on the rotation axis.

8. The battery cell stacking system of claim 5, wherein the receiving part comprises:
a first receiving part configured to support a first surface of the one or more battery cells; and
a second receiving part configured to support a second surface that is adjacent to the first surface of the one or more battery cells, wherein the second surface is narrower than the first surface.

9. The battery cell stacking system of claim 8, wherein the stacking table comprises a guide part configured to receive the one or more battery cells from the stacking device.

10. The battery cell stacking system of claim 9, further comprising a displacement sensor configured to sense a relative height between the second receiving part and an upper surface of the guide part.

11. The battery cell stacking system of claim 10, wherein, based on relative position information between the second receiving part and the upper surface of the guide part sensed by the displacement sensor, an offset between the second receiving part and the guide part is reduced by moving at least one of the second receiving part and the guide part.

12. The battery cell stacking system of claim 5, further comprising a vision camera configured to sense positions of the one or more battery cells by photographing the one or more battery cells mounted on the receiving part.

13. The battery cell stacking system of claim 12, wherein the stacking device is configured to perform a third operation to move along a longitudinal direction of the rotation axis based on position information of the one or more battery cells photographed by the vision camera.

14. The battery cell stacking system of claim 1, wherein a plurality of stacking devices are provided along the rotation axis.

15. The battery cell stacking system of claim 1, further comprising a supply
device configured to supply the one or more battery cells in a first direction to the stacking device,
wherein the stacking device is configured to stack the supplied one or more battery cells on the stacking table in a second direction intersecting the first direction.

16. The battery cell stacking system of claim 1, wherein the stacking device is configured to rotate 90 degrees or 180 degrees in a state that the one or more battery cells are mounted.

17. A battery cell stacking system comprising:
a stacking table on which a cell stack comprising one or more battery cells is manufactured; and
a stacking device configured to stack the one or more battery cells on the stacking table,
wherein the stacking device is configured to perform:
a first operation that is to rotate around a rotation axis connected to the stacking device while the one or more battery cells are mounted;
a second operation that is to move in a direction toward the stacking table to supply the one or more battery cells to the stacking table; and
a third operation that is to adjust positions of the one or more battery cells by moving in a direction parallel to the rotation axis.

18. The battery cell stacking system of claim 17, further comprising a vision camera configured to sense the positions by photographing the one or more battery cells mounted on the stacking device,
wherein the stacking device is configured to perform the third operation based on position information of the one or more battery cells photographed by the vision camera.

19. The battery cell stacking system of claim 17, further comprising:
a guide part that is disposed at the stacking table and configured to receive the one or more battery cells from the stacking device; and
a position sensor configured to sense relative positions between the guide part and the stacking device.
